# EUROPEAN PATENT SPECIFICATION

(11) **EP 4 393 823 B1**
(45) Date of publication and mention of the grant of the patent: **25.11.2026**
(21) Application number: 23220763.9
(22) Date of filing: 29.12.2023
(51) Int. Cl.: B64D 29/06

(54) **AIRCRAFT LATCH ASSEMBLY WITH LOCK SENSOR(S)**
FLUGZEUGVERRIEGELUNGSANORDNUNG MIT VERRIEGELUNGSSENSOR(EN)
ENSEMBLE VERROU D'AÉRONEF AVEC CAPTEUR(S) DE VERROUILLAGE

(30) Priority: 02.01.2023 IN 202311000143
(43) Date of publication of application: 03.07.2024
(73) Proprietor: Rohr, Inc., Chula Vista, CA 91910-2098 (US)
(72) Inventor: CHALLAMREDDY, Sangareddy, 585403 Bidar (IN); SHIVARUDRAPPA, Shashidhar, 560040 Bangalore (IN)
(74) Representative: Dehns

(56) References cited:
- CA-A1- 2 711 594
- CN-A- 110 616 953
- FR-A1- 3 007 390
- US-B2- 7 131 672

## Description

### TECHNICAL FIELD

This disclosure relates generally to a latch assembly for a structure such as, for example, an aircraft cowl.

### BACKGROUND

A modern aircraft propulsion system typically includes a gas turbine engine and a nacelle housing and providing an aerodynamic covering for the gas turbine engine. The nacelle may include one or more cowls for covering components of the gas turbine engine. These cowls may be pivotally mounted to a stationary structure enabling those cowls to be opened for providing access to the components underneath. The cowls may be secured in a closed position using one or more latch assemblies. Various types and configurations of latch assemblies are known in the art. While these known latch assemblies have various benefits, there is still room in the art for improvement.

Document FR3007390A1 discloses a locking mechanism for an aircraft cowling, said locking mechanism comprising at least one sensor for detecting whether a movable element is in a first position corresponding to the locked state of the cowling, wherein the sensor is an inductive proximity sensor that transmits a signal depending on whether or not the movable element is in the first position. Document US7131672B2 discloses a latch mechanism in combination with a sensor assembly for use in latching a first structure to a second structure such as a panel to an aircraft; the latch mechanism and sensor assembly include a hook mechanism carried on a first structure and a keeper mechanism retained on a second structure; the sensor assembly is connected to the hook mechanism or the keeper mechanism or with both for detecting characteristics thereof; an output device of the sensor assembly is provided for at least indicating the condition of the sensor device.

### SUMMARY

According to an aspect of the present disclosure, an assembly is provided for an aircraft, as claimed in claim 1.

The assembly may also include a second sensor configured to provide a second signal when the lock element is in one of the locked position or the unlocked position.

The electronic sensor may be configured to provide the signal when the lock element is in the locked position.

The electronic sensor may be configured to provide the signal when the lock element is in the unlocked position.

The electronic sensor may be configured as or otherwise include a rotary sensor.

The electronic sensor may be configured as or otherwise include a proximity sensor.

The assembly may also include a second electronic sensor configured to provide a second signal when the lock element is in one of the locked position or the unlocked position.

The electronic sensor and the second electronic sensor may be different types of sensors. The electronic sensor may be configured as or otherwise include a rotary sensor. The second electronic sensor may be configured as or otherwise include a proximity sensor.

The assembly may also include a user interface configured to present an indicator when the electronic sensor provides the signal.

The lock element may be configured as or otherwise include a lever.

The lock may also include a catch. The lock element may be aligned with the catch locking the handle in the closed position when the lock element is in the locked position. The lock element may be misaligned from the catch unlocking the handle from the closed position when the lock element is in the unlocked position.

The lock element may be configured to rotate about a lock element axis between the locked position and the unlocked position.

The assembly may also include a fitting adjacent the handle. The lock may also include a bolt rotatably mounted to the fitting. The lock element may be rotationally fixed to the bolt.

The latch may be configured to pivot about a latch axis between the closed position and the open position. The latch axis may be angularly offset from the lock element axis.

The latch may be configured to pivot about a latch axis between the closed position and the open position. The latch axis may be parallel with the lock element axis.

The handle may extend longitudinally between a first end and a second end. The lock may be arranged at the first end.

The fitting may include a land. The lock also includes a catch. The lock element may extend between a first end and a second end. The lock element may be configured to engage the catch at the first end and the lock element may be configured to engage the land at the second end when the lock is in the locked position. The lock element may be configured to pivot about an axis moving the first end inwards and moving the second end outwards when the lock is moved from the locked position to the unlocked position. The catch may be configured to move past the lock element facilitating opening of the latch when the lock is in the unlocked position. The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial side sectional illustration of an aircraft assembly.
FIG. 2 is a side illustration of an aircraft propulsion system.
FIG. 3 is a schematic cross-sectional illustration of the aircraft propulsion system with its cowls in closed positions.
FIG. 4 is a schematic cross-sectional illustration of the aircraft propulsion system with its cowls in open positions.
FIG. 5 is a partial sectional illustration of the aircraft assembly with its latch in an open position.
FIG. 6 is a partial schematic sectional illustration of a portion of the latch assembly with a lock in a locked position.
FIG. 7 is a partial perspective illustration of a portion of the latch assembly with its lock in the locked position.
FIGS. 8 and 9 are perspective illustrations of a latch assembly shown without its keeper or its lock for ease of illustration.
FIGS. 10A and 10B are schematic sectional illustrations of a portion of the latch assembly with a handle release device in various positions.
FIGS. 11A and 11B are partial perspective illustrations of a portion of the latch assembly with its lock in various positions.
FIGS. 12A and 12B are partial perspective illustrations of a portion of the latch assembly with its lock in various positions and a monitoring system with a lock sensor.
FIGS. 13A and 13B are partial perspective illustrations of a portion of the latch assembly with its lock in various positions and another lock sensor.
FIG. 14 is a partial perspective illustration of a portion of the latch assembly with multiple lock sensors.
FIG. 15 is a partial perspective illustration of a portion of the latch assembly with another lock.

### DETAILED DESCRIPTION

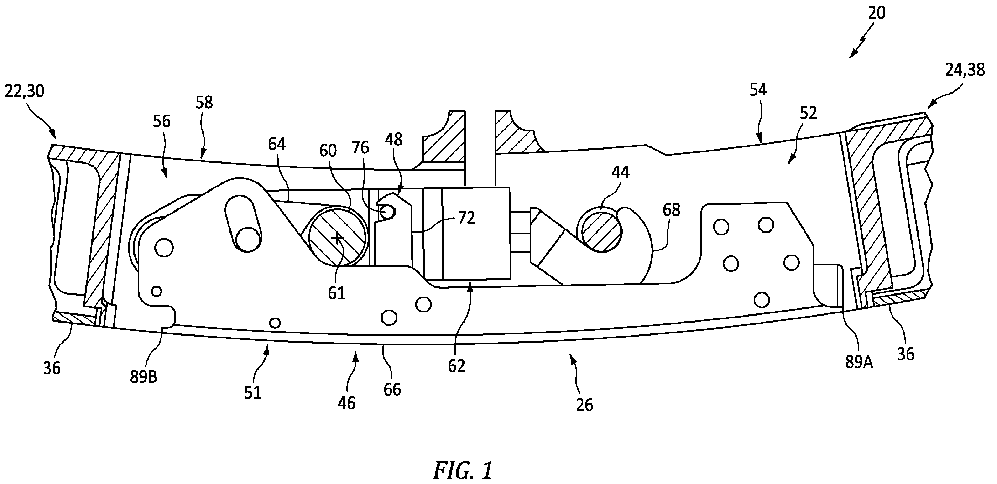

FIG. 1 illustrates an assembly 20 for an aircraft structure. An example of the aircraft structure is a nacelle for an aircraft propulsion system, where the nacelle houses an aircraft propulsion system powerplant such as, but not limited to, a gas turbine engine. Another example of the aircraft structure is an aircraft fuselage. The assembly 20 of the present disclosure, however, is not limited to the foregoing exemplary aircraft structures. The assembly 20 of FIG. 1 includes one or more aircraft components 22 and 24 and a latch assembly 26.

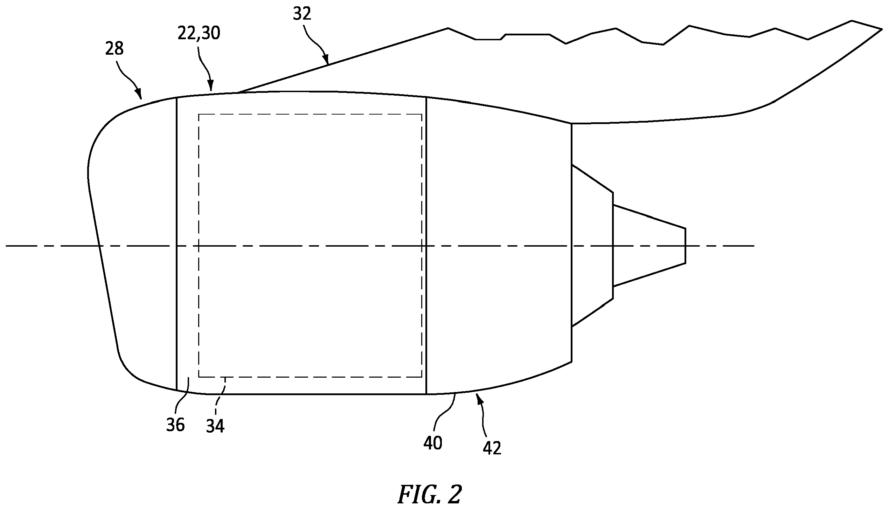

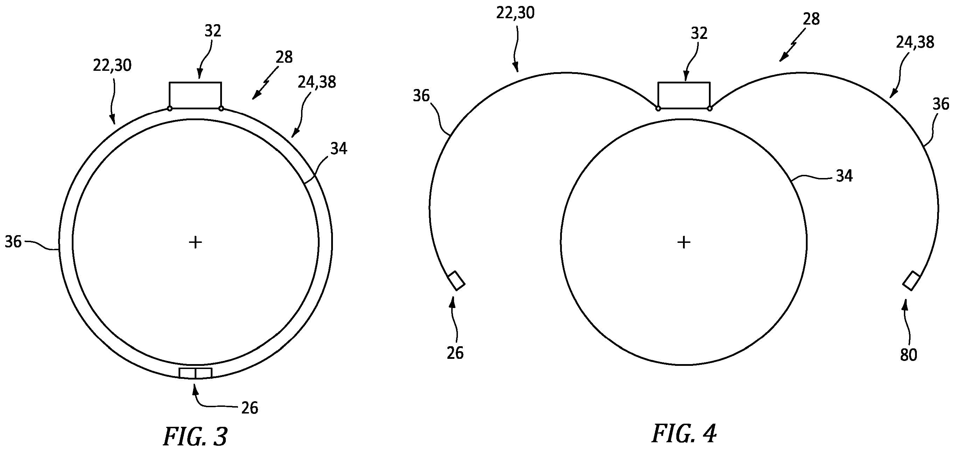

Referring to FIGS. 2-4, the first component 22 is part of an outer nacelle structure 28 for the aircraft propulsion system nacelle. The first component 22 of FIGS. 2-4, for example, may be configured as or otherwise include a first fan cowl 30 of the outer nacelle structure 28. This first fan cowl 30 is movably (e.g., pivotally) connected to a stationary structure 32 of the aircraft; e.g., a pylon structure for the aircraft propulsion system. The first fan cowl 30 is configured to move (e.g., pivot) between a fully closed position (e.g., see FIGS. 2 and 3) and a fully open position (e.g., see FIG. 4). In the closed position of FIG. 3, the first fan cowl 30 is configured to house and provide a first side aerodynamic covering for a fan case 34 for the powerplant. The first fan cowl 30 also partially forms an exterior aerodynamic surface 36 of the aircraft propulsion system nacelle.

The second component 24 is part of the outer nacelle structure 28. The second component 24 of FIGS. 3 and 4, for example, may be configured as or otherwise include a second fan cowl 38 of the outer nacelle structure 28, which second fan cowl 38 is arranged opposite the first fan cowl 30. This second fan cowl 38 is movably (e.g., pivotally) connected to the stationary structure 32. The second fan cowl 38 is configured to move (e.g., pivot) between a fully closed position (e.g., see FIG. 3) and a fully open position (e.g., see FIG. 4). In the closed position of FIG. 3, the second fan cowl 38 is configured to house and provide a second side aerodynamic covering for the fan case 34. The second fan cowl 38 also further forms the exterior aerodynamic surface 36 of the aircraft propulsion system nacelle.

The aircraft components 22 and 24 may be described herein as the fan cowls 30 and 38 for ease of description. It should be recognized, however, the latch assembly 26 may be configured with other components of the aircraft propulsion system or the aircraft fuselage. For example, referring to FIG. 2, each aircraft component 22, 24 may alternatively be configured as a respective section 40 (e.g., half; one visible in FIG. 2) of a thrust reverser 42, where the thrust reverser section 40 may be movably (e.g., pivotally) attached to the stationary structure 32 or another structure in a similar manner as described above with respect to the respective fan cowl 30, 38. The present disclosure therefore is not limited to any particular aircraft component configurations. Furthermore, while both aircraft components 22 and 24 are described as movable (e.g., pivotable) structures, it is contemplated one of the aircraft components 22, 24 may alternatively be configured as a fixed structure of the aircraft.

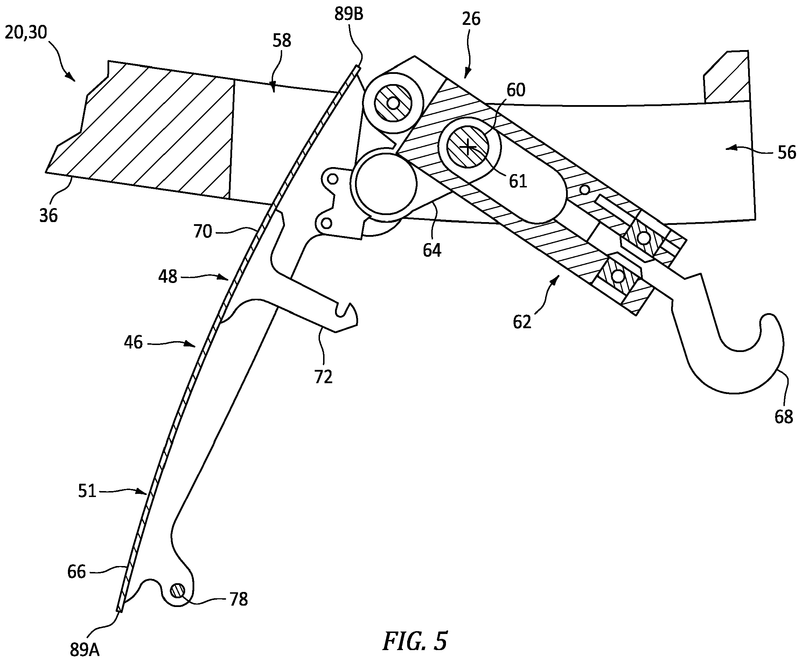

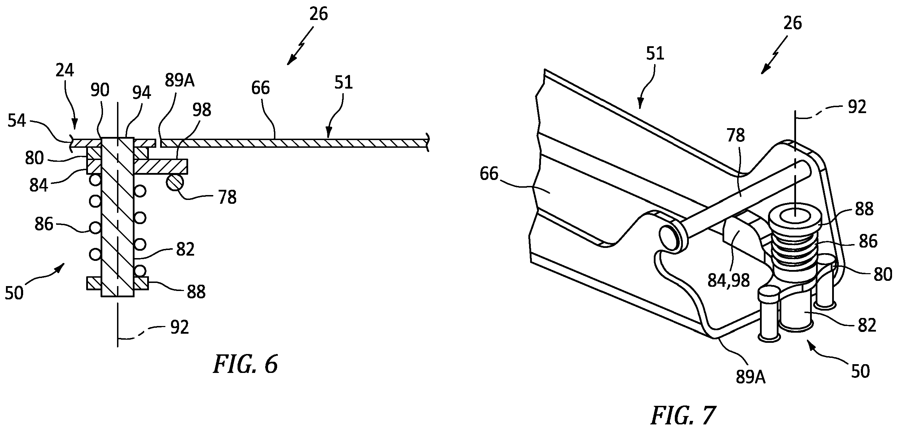

Referring again to FIG. 1, the latch assembly 26 is arranged at an interface between the first component 22 and the second component 24. The latch assembly 26 is configured to lock the (e.g., closed) aircraft components 22 and 24 together when the latch assembly 26 is closed / locked. The latch assembly 26 may thereby secure the first component 22 to the second component 24 when the latch assembly 26 is closed / locked. The latch assembly 26 is also configured to unlock the (e.g., closed) aircraft components 22 and 24 when the latch assembly 26 is open / unlocked. The latch assembly 26 may thereby enable movement of the first component 22 relative to the second component 24 (e.g., pivoting open each aircraft component 22, 24) when the latch assembly 26 is open / unlocked; e.g., see FIG. 5. The latch assembly 26 of FIG. 1 includes a keeper 44, a latch 46, a handle release device 48 and a lock 50 (see FIGS. 6 and 7). Briefly, the handle release device 48 of FIGS. 1 and 5 may operate as a primary lock for a handle 51 of the latch 46. The lock 50 of FIGS. 6 and 7 may operate as a secondary lock for the handle 51 and/or a lock for the handle release device 48.

The keeper 44 of FIG. 1 is (e.g., fixedly) mounted to the second component 24. The keeper 44, for example, may be disposed within and extend across a channel 52 in a fitting 54 of the second component 24. Each end of the keeper 44 may be connected to a respective side (e.g., flange, wall, etc.) of the second component fitting 54. The keeper 44 may be configured as a pin, a rod, a fastener or any other elongated body that may mate with the latch 46 as described below.

The latch 46 is (e.g., movably) mounted to the first component 22. The latch 46, for example, may be disposed within a channel 56 in a fitting 58 of the first component 22. A latch pin 60 may extend through at least one component of the latch 46 and across the channel 56 in the first component fitting 58. Each end of the latch pin 60 may be connected to a respective side (e.g., flange, wall, etc.) of the first component fitting 58. The latch pin 60 may form a latch axis 61 (e.g., a pivot axis) about which the latch 46 may pivot and move between its closed / locked arrangement (e.g., see FIG. 1) and its open / unlocked arrangement (e.g., see FIG. 5).

The latch 46 of FIG. 1 includes the handle 51 and a hook structure 62. The latch 46 may also include an intermediate linkage 64 operatively coupling the handle 51 to the hook structure 62. Of course, in other embodiments, it is contemplated the handle 51 may be directly operatively coupled to the hook structure 62 or alternatively multiple intermediate linkages may operatively couple the handle 51 to the hook structure 62.

The handle 51 is configured to move between a fully closed position (e.g., see FIG. 1) and a fully open position (e.g., see FIG. 5). In the closed position of FIG. 1, the latch 46 and its members 51, 62 and 64 may be disposed within the fitting channels 52 and 56 and a base 66 of the handle 51 may be flush with the exterior aerodynamic surface 36. The hook structure 62 engages the keeper 44. More particularly, a hook 68 at a distal end of the hook structure 62 may latch onto (e.g., grasp, partially wrap around and contact, etc.) the keeper 44. With this closed / locked latch assembly arrangement, the latch 46 may be locked onto the keeper 44 and the latch assembly 26 may maintain / secure the aircraft components 22 and 24 in their closed positions. By contrast, in the open position of FIG. 5, the latch 46 and its members 51, 62 and 64 may project out from the first fitting channel 56 and the handle base 66 may be angularly offset from the exterior aerodynamic surface 36. The hook structure 62 also disengages from the keeper 44 (see FIG. 1). More particularly, the hook 68 may no longer latch onto and/or contact the keeper 44 (see FIG. 1). With this open / unlocked latch assembly arrangement, the latch 46 may be unlocked from the keeper 44 allowing the aircraft components 22 and 24 to move relative to one another; e.g., allowing pivoting open of one or more of the aircraft components 22 and 24.

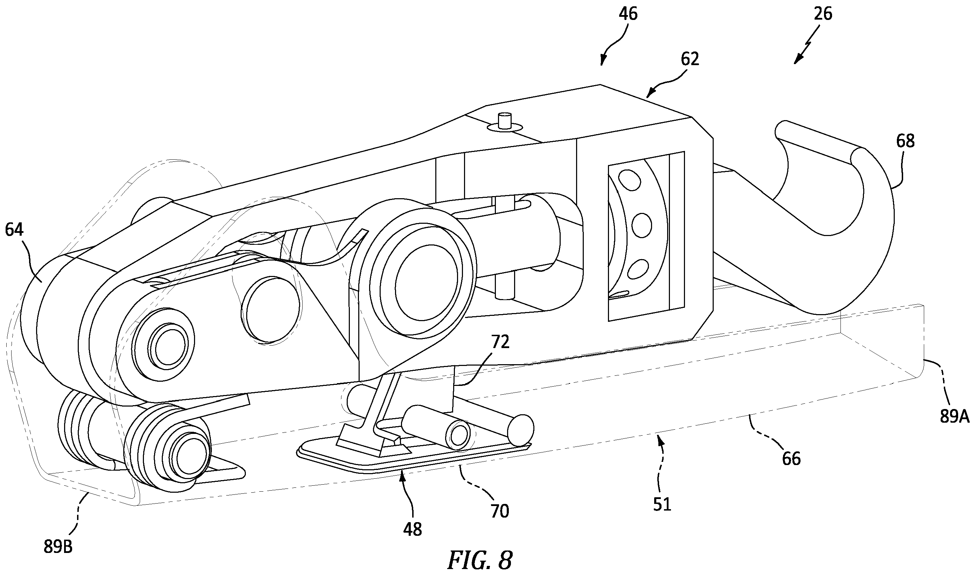

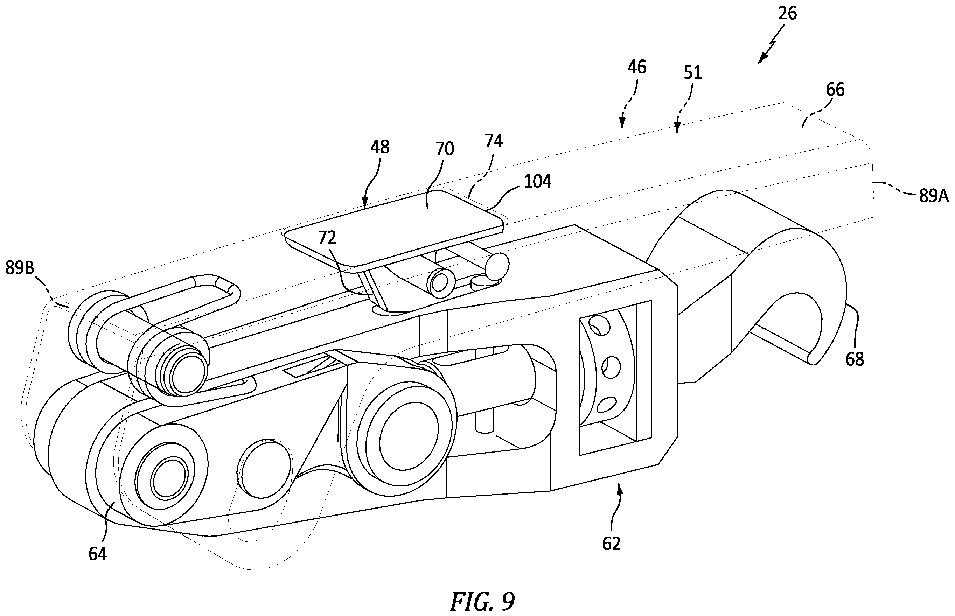

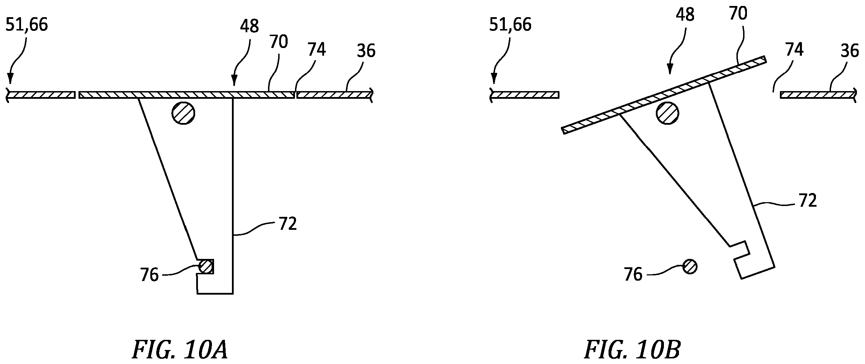

Referring to FIGS. 8 and 9, the handle release device 48 is movably (e.g., pivotally) connected to the latch 46. The handle release device 48, for example, includes a push button 70 (e.g., a planar panel) and a device latch 72. The device latch 72 is connected to and projects out from the push button 70. This device latch 72 may be pivotally connected to sidewalls of the handle 51 by a pin connection. With this arrangement, the handle release device 48 may move (e.g., pivot) between a first (e.g., locked) position (e.g., see FIG. 10A) and a second (e.g., unlocked) position (e.g., see FIG. 10B). In the first position of FIGS. 10A, the push button 70 may be seated in an aperture 74 (e.g., a port) through the handle base 66. The push button 70 may be flush with the exterior aerodynamic surface 36 and/or the handle base 66. The push button 70 may thereby be in an undepressed position. Here, the device latch 72 may engage (e.g., latch onto) a device keeper 76 on the latch 46; e.g., on the hook structure 62 of FIG. 1. With the handle release device 48 in its first position, the handle release device 48 locks (e.g., secures) the handle 51 in its closed position. By contrast, in the second position of FIG. 10B, the push button 70 may project into the handle 51 and the push button 70 may be angularly offset from the handle base 66 and/or the exterior aerodynamic surface 36. The push button 70 may thereby be in a depressed position. Here, the device latch 72 may disengage (e.g., release) the device keeper 76. With the handle release device 48 in its second position, the handle release device 48 unlocks the handle 51 from its closed position. In some embodiments, depressing the push button 70 may also allow another device (e.g., a spring, etc.) to at least partially push the handle 51 out from its closed position.

During certain events (e.g., a fan blade out event, fan windmilling, extreme turbulence, etc.), the handle 51 and the handle release device 48 may be subject to relatively large vibrations. In an unlikely event that these vibrations become large and/or periodic enough, it may be possible for the handle release device 48 to inadvertently move (e.g., rattle) into its second position. To prevent an unintended movement of the latch assembly 26 and its handle 51, the latch assembly 26 of FIGS. 6 and 7 is provided with the lock 50. This lock 50 may be configured to secure the handle 51 in its closed position.

Referring to FIGS. 6 and 7, the lock 50 may include a catch 78, a mount 80 (e.g., a bracket), a bolt 82, a lock element 84 (e.g., a lever), a spring 86 (e.g., a coil spring, a compression spring, etc.) and a retainer 88. The catch 78 may be configured as a part of, or a fixture connected to, the handle 51. The catch 78 of FIGS. 6 and 7, for example, is configured as a bolt (e.g., a pin, a rod, a fastener, etc.) extending laterally between two flanges of the handle 51. This catch 78 may be disposed at (e.g., on, adjacent or proximate) a respective longitudinal end 89A, 89B (generally referred to as "89") of the handle 51, where the handle 51 extends longitudinally between and to the handle first end 89A and the handle second end 89B of the handle 51 (see FIG. 5). Referring to FIG. 6, the mount 80 rotatably attaches the bolt 82 to one of the fittings 54 or 58 or another fixed structure (e.g., frame) of the respective aircraft components 22, 24. However, for ease of description, the catch 78 may be described below as being disposed at the handle first end 89A, and the mount 80 may be described as being mounted to the fitting 54. The bolt 82 (e.g., a pin, a rod, a fastener, etc.) is mated with an aperture 90 in the fitting 54. The bolt 82 of FIG. 6, for example, projects axially along a lock element axis 92 (e.g., a pivot axis) (in a first direction) into the aperture 90 to an exterior distal end 94 of the bolt 82. The bolt 82 projects axially along the axis 92 (in a second direction opposite the first direction) out from the fitting 54, sequentially through apertures in the lock members 80, 84, 86 and 88, to an interior distal end 96 of the bolt 82. The lock element 84 is rotationally fixed to the bolt 82 (e.g., via a keyed interface), but may translate axially along the bolt 82. The retainer 88 is mounted (e.g., fixed to) the bolt 82 at its interior distal end 96.

With the foregoing arrangement, each of the lock members 80, 84, 86 and 88 is mounted onto (and circumscribes) the bolt 82. The lock element 84 is axially between and may engage (e.g., contact, abut against, etc.) the mount 80 and the spring 86. The spring 86 is axially between and may engage the lock element 84 and the retainer 88. The spring 86 may be compressed between the lock element 84 and the retainer 88. The spring 86 may thereby bias (e.g., press) the lock element 84 axially in the first direction against the mount 80 and towards the fitting 54. The spring bias force may be selected to prevent unintentional rotation of the bolt 82 and, thus, the lock element 84 about the axis 92. In other words, the spring bias force may be selected such that the large vibrations discussed above cannot ready disengage the lock 50.

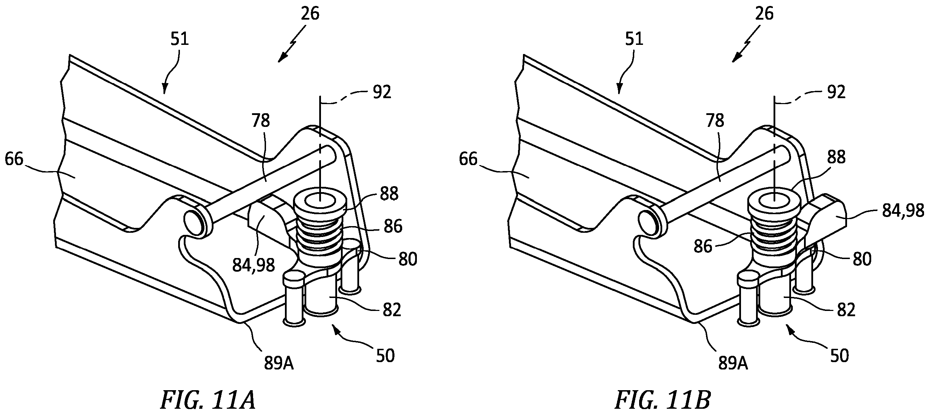

The lock members 82 and 84 may be rotatable about the axis 92 between a locked position (e.g., see FIG. 11A) and an unlocked position (e.g., see FIG. 11B). In the locked position of FIG. 11A, the lock element 84 is aligned with the catch 78 / the handle 51. More particularly, an arm 98 of the lock element 84 projects over and overlaps the catch 78. The lock element 84 and its arm 98 may thereby form a stop which prevents movement (e.g., lifting) of the handle 51 out of its closed position. The lock 50 therefore locks the handle 51 in its closed position. By contrast, in the unlocked position of FIG. 11B, the lever arm 98 is misaligned from the catch 78 / the handle 51. More particularly, the lever arm 98 is positioned next to (e.g., does not overlap) the catch 78. The lock element 84 and its arm 98 may thereby no longer obstruct movement (e.g., lifting) of the handle 51 out of its closed position. The lock 50 therefore unlocks the handle 51 from its closed position.

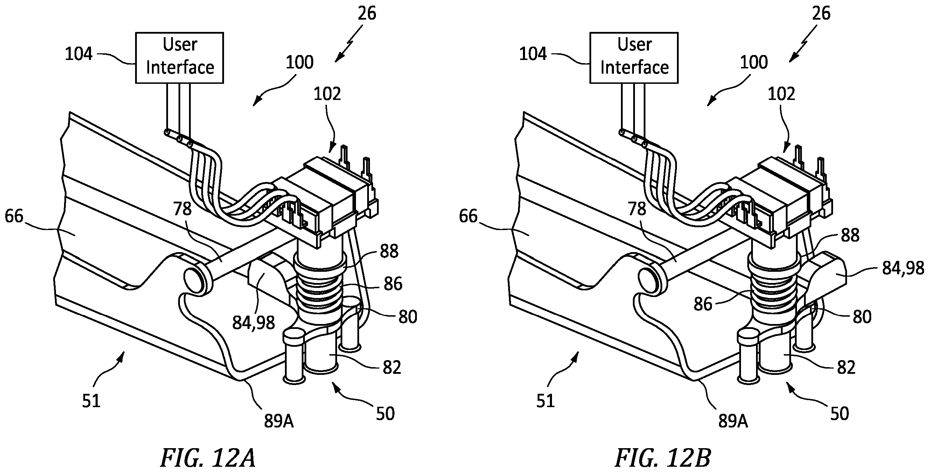

Referring to FIGS. 12A and 12B, the latch assembly 26 is configured with a monitoring system 100 for monitoring a status of the latch assembly 26. The monitoring system 100, for example, may monitor whether the lock 50 is (e.g., completely) locked or (e.g., partially or completely) unlocked.

The monitoring system 100 of FIGS. 12A and 12B includes a lock sensor 102 for the lock 50 and a user interface 104 (e.g., a display screen, an indicator light, a speaker, etc.) and/or another computing device in signal communication with the lock sensor 102. The lock sensor 102 may be configured to monitor whether the lock element 84 and its arm 98 are in the locked position (see FIG. 12A) or the unlocked position (see FIG. 12B), or optionally an intermediate position between the locked position and the unlocked position. The lock sensor 102 of FIGS. 12A and 12B, for example, is configured as an electronic sensor such as a rotary sensor. This lock sensor 102 may be rotationally coupled to the bolt 82 such that the lock sensor 102 may determine a rotational position of the bolt 82 and, thus, the lock element 84 and its arm 98 about the axis 92 (see FIGS. 11A and 11B). When the lock element 84 and its arm 98 are in the locked position, the lock sensor 102 may provide a lock signal, and the user interface 104 may present a lock indicator (e.g., visual and/or audible alert) to a user; e.g., the user within a cockpit of the aircraft. In addition or alternatively, when the lock element 84 and its arm 98 are in the unlocked position, the lock sensor 102 may provide an unlock signal, and the user interface 104 may present an unlock indicator (e.g., visual and/or audible alert) to the user. In this manner, a pilot may confirm whether or not the aircraft components 22, 24 have been properly secured for flight without requiring, for example, a visual inspection.

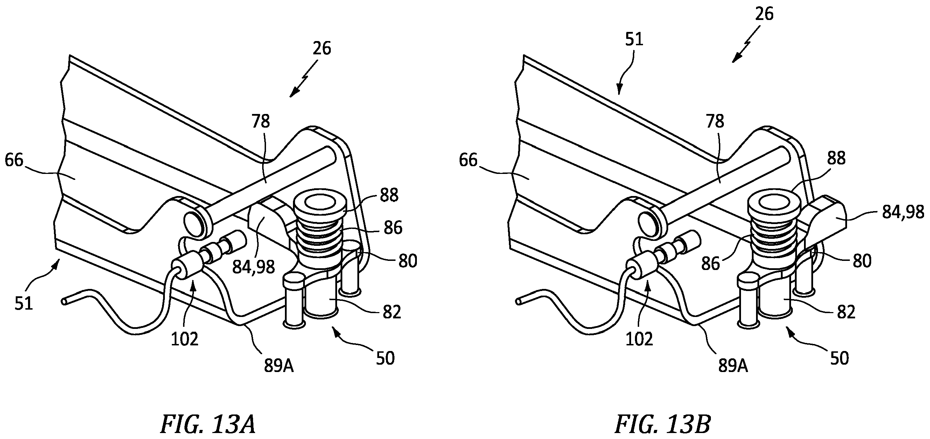

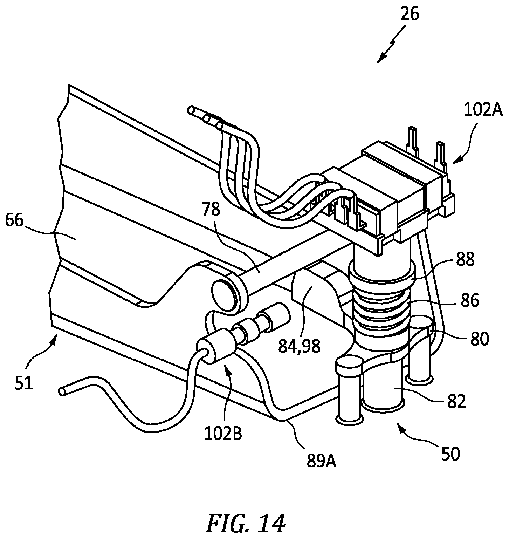

In some embodiments, referring to FIGS. 12A and 12B, the lock sensor 102 may be configured as the rotary sensor. In other embodiments, referring to FIGS. 13A and 13B, the lock sensor 102 may alternatively be configured as an electronic sensor such as a proximity sensor. With such a configuration, the lock sensor 102 may determine the lock 50 is locked when the lock element 84 and its arm 98 are, for example, close to the lock sensor 102. By contrast, the lock sensor 102 may determine the lock 50 is unlocked when the lock element 84 and its arm 98 are, for example, far from the lock sensor 102 (or not detectable by the lock sensor 102). In still other embodiments, referring to FIG. 14, the monitoring system 100 may include multiple lock sensors 102A and 102B (generally referred to as "102") for redundancy. These lock sensors 102 may be configured as different types of electronic sensors. The first lock sensor 102A, for example, may be configured as a rotary sensor and the second lock sensor 102B may be configured as a proximity sensor; however, the present disclosure is not limited to such exemplary lock sensors.

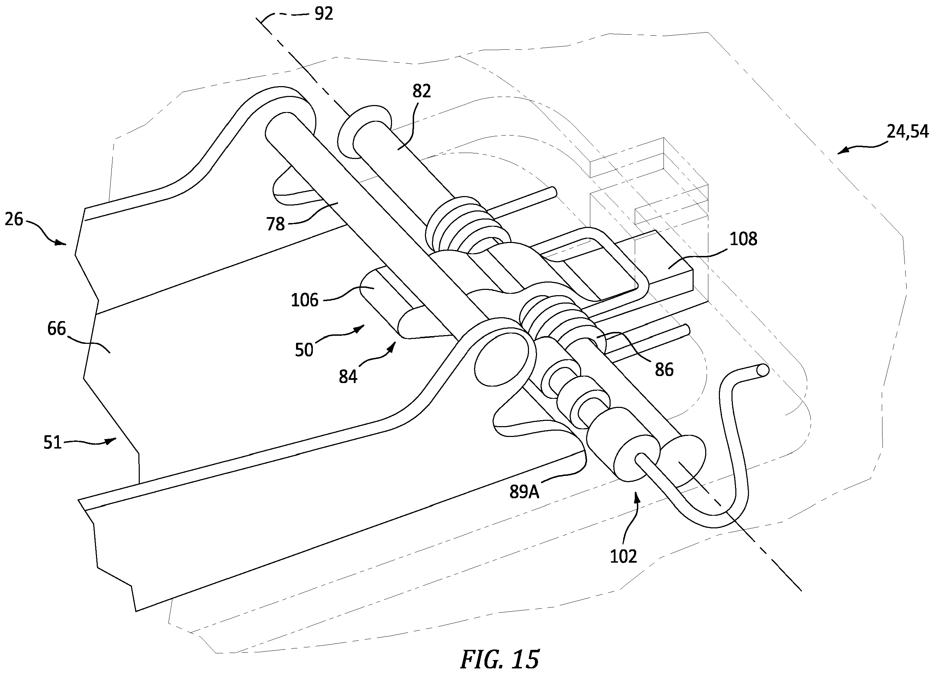

In some embodiments, the lock 50 may be configured such that its axis 92 (see FIG. 6) is angularly offset from (e.g., perpendicular to) the axis 61 of the latch 46 (see FIGS. 1 and 5). In other embodiments, the lock 50 may be configured such that its axis 92 (see FIG. 15) is parallel with the axis 61 of the latch 46 (see FIGS. 1 and 5). In the specific embodiment of FIG. 15, when the lock 50 is locked, a first end 106 of the lock element 84 (e.g., the lever) is configured to engage (e.g., contact) the catch 78 and a second end 108 of the lock element 84 is configured to engage (e.g., contact) a land of the fitting 54. When the lock 50 is unlocked, the lock element 84 may be pivoted about its axis 92 (e.g., the first end 106 may move inward (up in FIG. 15) and the second end 108 may move outwards (down in FIG. 15)) such that the catch 78 may move past the lock element 84 facilitating opening of the latch 46 and its handle 51.

While various embodiments of the present invention have been disclosed, it will be apparent to those of ordinary skill in the art that many more embodiments and implementations are possible within the scope of the claims. For example, the present invention as described herein includes several aspects and embodiments that include particular features. Although these features may be described individually, it is within the scope of the present claims that some or all of these features may be combined with any one of the aspects and remain within the scope of the claims. Accordingly, the present invention is not to be restricted except in light of the attached claims.

## Claims

1. An assembly (20) for an aircraft, comprising:
a fixed structure (32);
an outer nacelle structure (28), comprising:
a first aircraft component (22) pivotally attached to the fixed structure (32); and
a second aircraft component (24) pivotally attached to the fixed structure (32);
a latch assembly (26), comprising:
a keeper (44) mounted to the second aircraft component (24);
a latch (46) mounted to the first aircraft component (22), the latch (46) including a handle (51) and a hook structure (62) operatively coupled to the handle (51), the handle (51) configured to move between a closed position and an open position, the hook structure (62) engaged with the keeper (44) when the handle (51) is in the closed position, and the hook structure (62) disengaged from the keeper (44) when the handle (51) is in the open position;
a handle release device (48) wherein the handle release device (48) is movably connected to the latch (46);
wherein the handle release device (48) is configured, in a first position, to lock the handle (51) in its closed position and, in a second position, to unlock the handle (51) from its closed position; **characterised by**
a lock (50) comprising a lock element (84) configured to move between a locked position and an unlocked position, the lock (50) configured to lock the handle (51) in the closed position when the lock element (84) is in the locked position, and the lock (50) configured to unlock the handle (51) from the closed position when the lock element (84) is in the unlocked position; and
an electronic sensor (102) configured to provide a signal when the lock element (84) is in one of the locked position or the unlocked position.

2. The assembly of claim 1, wherein the electronic sensor (102) is configured to provide the signal when the lock element (84) is in the locked position.

3. The assembly of claim 1, wherein the electronic sensor (102) is configured to provide the signal when the lock element (84) is in the unlocked position.

4. The assembly of claim 1, 2 or 3, wherein the electronic sensor (102) comprises a rotary sensor or a proximity sensor.

5. The assembly of any of claims 1 to 4, further comprising a second electronic sensor (102) configured to provide a second signal when the lock element (84) is in one of the locked position or the unlocked position.

6. The assembly of claim 5, wherein the electronic sensor (102) and the second electronic sensor (102) are different types of sensors, or wherein the electronic sensor (102) comprises a rotary sensor and the second electronic sensor (102) comprises a proximity sensor.

7. The assembly of any preceding claim, further comprising a user interface (104) configured to present an indicator when the electronic sensor (102) provides the signal.

8. The assembly of any preceding claim, wherein the lock element (84) comprises a lever.

9. The assembly of any preceding claim, wherein:
the lock (50) further comprises a catch (78);
the lock element (84) is aligned with the catch (78) locking the handle (51) in the closed position when the lock element (84) is in the locked position; and
the lock element (84) is misaligned from the catch (78) unlocking the handle (51) from the closed position when the lock element (84) is in the unlocked position.

10. The assembly of any preceding claim, wherein the lock element (84) is configured to rotate about a lock element axis (92) between the locked position and the unlocked position.

11. The assembly of claim 10, wherein the latch (46) is configured to pivot about a latch axis (61) between the closed position and the open position, and the latch axis (61) is angularly offset from the lock element axis (92) or parallel with the lock element axis (92).

12. The assembly of any preceding claim, further comprising a fitting (54) adjacent the handle (51), the lock (50) further including a bolt (82) rotatably mounted to the fitting (54), and the lock element (84) rotationally fixed to the bolt (82).

13. The assembly of any preceding claim, wherein the handle (51) extends longitudinally between a first end (89A) and a second end (89B), and the lock (50) is arranged at the first end (89A).

14. The assembly of any preceding claim, further comprising:
a or the fitting (54) adjacent the handle (51), the fitting (54) comprising a land;
the lock (50) further comprising a or the catch (78);
the lock element (84) extending between a first end (106) and a second end (108);
the lock element (84) configured to engage the catch (78) at the first end (106) and the lock element (84) configured to engage the land at the second end (108) when the lock (50) is in the locked position; and
the lock element (84) configured to pivot about an or the lock element axis (92) moving the first end (106) inwards and moving the second end (108) outwards when the lock (50) is moved from the locked position to the unlocked position, wherein the catch (78) is configured to move past the lock element (84) facilitating opening of the latch (46) when the lock (50) is in the unlocked position.

## Patentansprüche

1. Eine Baugruppe (20) für ein Luftfahrzeug, umfassend:
eine feste Struktur (32);
eine äußere Verkleidungsstruktur (28), umfassend:
eine erste Luftfahrzeugkomponente (22), die schwenkbar an der festen Struktur (32) angebracht ist; und
eine zweite Luftfahrzeugkomponente (24), die schwenkbar an der festen Struktur (32) angebracht ist;
eine Verriegelungsanordnung (26), umfassend:
einen Halter (44), der an der zweiten Luftfahrzeugkomponente (24) angebracht ist;
eine Verriegelung (46), die an der ersten Luftfahrzeugkomponente (22) angebracht ist, wobei die Verriegelung (46) einen Griff (51) und eine mit dem Griff (51) wirkverbundene Hakenstruktur (62) aufweist, wobei der Griff (51) so ausgebildet ist, dass er sich zwischen einer geschlossenen Position und einer offenen Position bewegen kann, wobei die Hakenstruktur (62) mit dem Halter (44) in Eingriff steht, wenn sich der Griff (51) in der geschlossenen Position befindet, und wobei die Hakenstruktur (62) außer Eingriff mit dem Halter (44) ist, wenn sich der Griff (51) in der offenen Position befindet;
eine Griffentriegelungsvorrichtung (48), wobei die Griffentriegelungsvorrichtung (48) beweglich mit der Verriegelung (46) verbunden ist;
wobei die Griffentriegelungsvorrichtung (48) so ausgebildet ist, dass sie in einer ersten Position den Griff (51) in seiner geschlossenen Position verriegelt und in einer zweiten Position den Griff (51) aus seiner geschlossenen Position entriegelt; **dadurch gekennzeichnet, dass** sie
ein Schloss (50) umfasst, das ein Schlosselement (84) aufweist, das so ausgebildet ist, dass es sich zwischen einer verriegelten Position und einer entriegelten Position bewegen kann, wobei das Schloss (50) so ausgebildet ist, dass es den Griff (51) in der geschlossenen Position verriegelt, wenn sich das Schlosselement (84) in der verriegelten Position befindet, und wobei das Schloss (50) so ausgebildet ist, dass es den Griff (51) aus der geschlossenen Position entriegelt, wenn sich das Schlosselement (84) in der entriegelten Position befindet; und
einen elektronischen Sensor (102), der so ausgebildet ist, dass er ein Signal liefert, wenn sich das Schlosselement (84) in der verriegelten Position oder in der entriegelten Position befindet.

2. Die Baugruppe nach Anspruch 1, wobei der elektronische Sensor (102) so ausgebildet ist, dass er das Signal liefert, wenn sich das Schlosselement (84) in der verriegelten Position befindet.

3. Die Baugruppe nach Anspruch 1, wobei der elektronische Sensor (102) so ausgebildet ist, dass er das Signal liefert, wenn sich das Schlosselement (84) in der entriegelten Position befindet.

4. Die Baugruppe nach Anspruch 1, 2 oder 3, wobei der elektronische Sensor (102) einen Drehsensor oder einen Näherungssensor umfasst.

5. Die Baugruppe nach einem der Ansprüche 1 bis 4, ferner umfassend einen zweiten elektronischen Sensor (102), der so ausgebildet ist, dass er ein zweites Signal liefert, wenn sich das Schlosselement (84) in der verriegelten Position oder in der entriegelten Position befindet.

6. Die Baugruppe nach Anspruch 5, wobei der elektronische Sensor (102) und der zweite elektronische Sensor (102) unterschiedliche Sensortypen sind, oder wobei der elektronische Sensor (102) einen Drehsensor umfasst und der zweite elektronische Sensor (102) einen Näherungssensor umfasst.

7. Die Baugruppe nach einem der vorhergehenden Ansprüche, ferner umfassend eine Benutzerschnittstelle (104), die so ausgebildet ist, dass sie eine Anzeige darstellt, wenn der elektronische Sensor (102) das Signal liefert.

8. Die Baugruppe nach einem der vorhergehenden Ansprüche, wobei das Schlosselement (84) einen Hebel umfasst.

9. Die Baugruppe nach einem der vorhergehenden Ansprüche, wobei:
das Schloss (50) ferner eine Klinke (78) umfasst;
das Schlosselement (84) mit der Klinke (78) ausgerichtet ist, wodurch der Griff (51) in der geschlossenen Position verriegelt wird, wenn sich das Schlosselement (84) in der verriegelten Position befindet; und
das Schlosselement (84) von der Klinke (78) nicht ausgerichtet ist, wodurch der Griff (51) aus der geschlossenen Position entriegelt wird, wenn sich das Schlosselement (84) in der entriegelten Position befindet.

10. Die Baugruppe nach einem der vorhergehenden Ansprüche, wobei das Schlosselement (84) so ausgebildet ist, dass es sich um eine Schlosselementachse (92) zwischen der verriegelten Position und der entriegelten Position drehen kann.

11. Die Baugruppe nach Anspruch 10, wobei die Verriegelung (46) so ausgebildet ist, dass sie sich um eine Verriegelungsachse zwischen der geschlossenen Position und der offenen Position verschwenken kann, und die Verriegelungsachse (61) winkelversetzt zur Schlosselementachse (92) oder parallel zur Schlosselementachse (92) ist.

12. Die Baugruppe nach einem der vorhergehenden Ansprüche, ferner umfassend einen Beschlag (54) angrenzend an den Griff (51), wobei das Schloss (50) ferner einen Bolzen (82) umfasst, der drehbar an dem Beschlag (54) angebracht ist, und das Schlosselement (84) drehfest mit dem Bolzen (82) verbunden ist.

13. Die Baugruppe nach einem der vorhergehenden Ansprüche, wobei sich der Griff (51) longitudinal zwischen einem ersten Ende (89A) und einem zweiten Ende (89B) erstreckt, und das Schloss (50) an dem ersten Ende (89A) angeordnet ist.

14. Die Baugruppe nach einem der vorhergehenden Ansprüche, ferner umfassend:
einen oder den Beschlag (54) angrenzend an den Griff (51), wobei der Beschlag (54) eine Auflagefläche umfasst;
wobei das Schloss (50) ferner eine oder die Klinke (78) umfasst;
wobei sich das Schlosselement (84) zwischen einem ersten Ende (106) und einem zweiten Ende (108) erstreckt;
wobei das Schlosselement (84) so ausgebildet ist, dass es an dem ersten Ende (106) mit der Klinke (78) in Eingriff steht und das Schlosselement (84) so ausgebildet ist, dass es an dem zweiten Ende (108) mit der Auflagefläche in Eingriff steht, wenn sich das Schloss (50) in der verriegelten Position befindet; und
wobei das Schlosselement (84) so ausgebildet ist, dass es sich um eine oder die Schlosselementachse (92) verschwenkt, wodurch sich das erste Ende (106) nach innen und das zweite Ende (108) nach außen bewegt, wenn das Schloss (50) von der verriegelten Position in die entriegelte Position bewegt wird, wobei die Klinke (78) so ausgebildet ist, dass sie sich an dem Schlosselement (84) vorbeibewegt, wodurch das Öffnen der Verriegelung (46) ermöglicht wird, wenn sich das Schloss (50) in der entriegelten Position befindet.

## Revendications

1. Ensemble (20) pour aéronef, comprenant :
une structure fixe (32) ;
une structure de nacelle extérieure (28), comprenant :
un premier composant d'aéronef (22) fixé de manière pivotante à la structure fixe (32) ; et
un second composant d'aéronef (24) fixé de manière pivotante à la structure fixe (32) ;
un ensemble de verrouillage (26), comprenant :
un dispositif de retenue (44) monté sur le second composant d'aéronef (24) ;
un loquet (46) monté sur le premier composant d'aéronef (22), le loquet (46) comprenant une poignée (51) et une structure à crochet (62) fonctionnellement couplée à la poignée (51), la poignée (51) étant configurée pour se déplacer entre une position fermée et une position ouverte, la structure à crochet (62) étant engagée avec le dispositif de retenue (44) lorsque la poignée (51) est en position fermée, et la structure à crochet (62) étant désengagée du dispositif de retenue (44) lorsque la poignée (51) est en position ouverte ;
un dispositif de déverrouillage de poignée (48), le dispositif de déverrouillage de poignée (48) étant relié de manière mobile au loquet (46) ;
dans lequel le dispositif de déverrouillage de poignée (48) est configuré, dans une première position, pour verrouiller la poignée (51) dans sa position fermée et, dans une seconde position, pour déverrouiller la poignée (51) de sa position fermée ; **caractérisé par**
un verrou (50) comprenant un élément de verrouillage (84) configuré pour se déplacer entre une position verrouillée et une position déverrouillée, le verrou (50) étant configuré pour verrouiller la poignée (51) dans la position fermée lorsque l'élément de verrouillage (84) est en position verrouillée, et le verrou (50) étant configuré pour déverrouiller la poignée (51) de la position fermée lorsque l'élément de verrouillage (84) est en position déverrouillée ; et
un capteur électronique (102) configuré pour fournir un signal lorsque l'élément de verrouillage (84) est dans l'une de la position verrouillée ou de la position déverrouillée.

2. Ensemble selon la revendication 1, dans lequel le capteur électronique (102) est configuré pour fournir le signal lorsque l'élément de verrouillage (84) est en position verrouillée.

3. Ensemble selon la revendication 1, dans lequel le capteur électronique (102) est configuré pour fournir le signal lorsque l'élément de verrouillage (84) est en position déverrouillée.

4. Ensemble selon la revendication 1, 2 ou 3, dans lequel le capteur électronique (102) comprend un capteur rotatif ou un capteur de proximité.

5. Ensemble selon l'une quelconque des revendications 1 à 4, comprenant en outre un second capteur électronique (102) configuré pour fournir un second signal lorsque l'élément de verrouillage (84) est dans l'une de la position verrouillée ou de la position déverrouillée.

6. Ensemble selon la revendication 5, dans lequel le capteur électronique (102) et le second capteur électronique (102) sont des types de capteurs différents, ou dans lequel le capteur électronique (102) comprend un capteur rotatif et le second capteur électronique (102) comprend un capteur de proximité.

7. Ensemble selon l'une quelconque des revendications précédentes, comprenant en outre une interface utilisateur (104) configurée pour présenter un indicateur lorsque le capteur électronique (102) fournit le signal.

8. Ensemble selon l'une quelconque des revendications précédentes, dans lequel l'élément de verrouillage (84) comprend un levier.

9. Ensemble selon l'une quelconque des revendications précédentes, dans lequel :
le verrou (50) comprend en outre un cliquet (78) ;
l'élément de verrouillage (84) est aligné avec le cliquet (78) verrouillant la poignée (51) dans la position fermée lorsque l'élément de verrouillage (84) est en position verrouillée ; et
l'élément de verrouillage (84) est désaligné du cliquet (78) déverrouillant la poignée (51) de la position fermée lorsque l'élément de verrouillage (84) est en position déverrouillée.

10. Ensemble selon l'une quelconque des revendications précédentes, dans lequel l'élément de verrouillage (84) est configuré pour tourner autour d'un axe d'élément de verrouillage (92) entre la position verrouillée et la position déverrouillée.

11. Ensemble selon la revendication 10, dans lequel le loquet (46) est configuré pour pivoter autour d'un axe de loquet entre la position fermée et la position ouverte, et l'axe de loquet (61) est angulairement décalé par rapport à l'axe d'élément de verrouillage (92) ou parallèle à l'axe d'élément de verrouillage (92).

12. Ensemble selon l'une quelconque des revendications précédentes, comprenant en outre une ferrure (54) adjacente à la poignée (51), le verrou (50) comprenant en outre un boulon (82) monté de manière rotative sur la ferrure (54), et l'élément de verrouillage (84) étant fixé en rotation au boulon (82).

13. Ensemble selon l'une quelconque des revendications précédentes, dans lequel la poignée (51) s'étend longitudinalement entre une première extrémité (89A) et une seconde extrémité (89B), et le verrou (50) est disposé à la première extrémité (89A).

14. Ensemble selon l'une quelconque des revendications précédentes, comprenant en outre :
une ferrure (54) adjacente à la poignée (51), la ferrure (54) comprenant une portée ;
le verrou (50) comprenant en outre un cliquet (78) ;
l'élément de verrouillage (84) s'étendant entre une première extrémité (106) et une seconde extrémité (108) ;
l'élément de verrouillage (84) étant configuré pour venir en prise avec le cliquet (78) au niveau de la première extrémité (106) et l'élément de verrouillage (84) étant configuré pour venir en prise avec la portée au niveau de la seconde extrémité (108) lorsque le verrou (50) est en position verrouillée ; et
l'élément de verrouillage (84) étant configuré pour pivoter autour d'un axe d'élément de verrouillage (92) déplaçant la première extrémité (106) vers l'intérieur et déplaçant la seconde extrémité (108) vers l'extérieur lorsque le verrou (50) est déplacé de la position verrouillée à la position déverrouillée, dans lequel le cliquet (78) est configuré pour se déplacer au-delà de l'élément de verrouillage (84) facilitant l'ouverture du loquet (46) lorsque le verrou (50) est en position déverrouillée.
